# EUROPEAN PATENT APPLICATION

(11) **EP 3 020 519 A1**
(43) Date of publication of application: **18.05.2016**
(21) Application number: 13889258.3
(22) Date of filing: 09.07.2013
(51) Int. Cl.: B25J 19/02, B25J 17/00, B25J 17/02

(54) **ROBOT, AND JOINT MECHANISM FOR ROBOT**

(71) Applicant: Kabushiki Kaisha Yaskawa Denki, Kitakyushu-shi, Fukuoka 806-0004 (JP)
(72) Inventor: SAITO, Hiroshi, Kitakyushu-shi Fukuoka 806-0004 (JP); ICHIBANGASE, Atsushi, Kitakyushu-shi Fukuoka 806-0004 (JP); TANAKA, Kentaro, Kitakyushu-shi Fukuoka 806-0004 (JP)
(74) Representative: Grünecker Patent- und Rechtsanwälte PartG mbB
(86) International application number: PCT/JP2013/068753
(87) International publication number: WO 2015/004731

(57) **Abstract**

An object of the invention is to detect rotation of an arm accurately. To solve such an object, a robot (1) according to an aspect of an embodiment includes a driving body (24), a driven body (26) that is rotatably coupled to the driving body (24), a driving device (250) that drives the driven body (26) and is provided on the driven body (26), and an encoder (254) that is attached to a final output shaft of the driving device (250).

## Description

### Field

An embodiment discussed herein relates to a robot and a robot joint mechanism.

### Background

A robot has conventionally been known that has an arm part composed of a plurality of arms that are rotatably coupled through a joint mechanism. Such a robot joint mechanism is, for example, a joint mechanism that includes a speed reducer, a motor, and an encoder that are serially and coaxially arranged on an output shaft or the like of the motor (see, for example, Patent Literature 1). Herein, the encoder detects rotation of each arm.

### Citation List

### Patent Literature

Patent Literature 1: Japanese Laid-open Patent Publication No. 2011-24406

### Summary

### Technical Problem

However, the conventional technique described above has room for further improvement in detecting rotation of an arm accurately.

Specifically, in the case where the conventional joint mechanism described above is used, the encoder detects, strictly speaking, rotation of the output shaft of the motor. For this reason, it is insufficient for accurately detecting practical arm rotation that is transmitted from the output shaft of the motor to a final output shaft through the speed reducer.

An aspect of an embodiment has been achieved in view of the above, and an object of the embodiment is to provide a robot and a robot joint mechanism that are capable of detecting rotation of an arm accurately. Solution to Problem

A robot according to an aspect of an embodiment includes a driving body, a driven body that is rotatably coupled to the driving body, a driving device that drives the driven body, and an encoder that is attached to a final output shaft of the driving device. The driving device is provided on the driven body.

### Advantageous Effects of Invention

According to an aspect of an embodiment, it is possible to detect rotation of a driven body accurately.

### Brief Description of Drawings

FIG. 1 is a perspective schematic view illustrating a configuration of a robot according to an embodiment.
FIG. 2A is a perspective schematic view of a driving device.
FIG. 2B is a general enlarged view illustrating the periphery of a third joint.
FIG. 3A is a transparent plan view illustrating the periphery of the third joint.
FIG. 3B is a general enlarged cross-sectional view illustrating the periphery of the driving device when being cut in an XY-plane.

### Description of Embodiment

An embodiment of a robot and a robot joint mechanism disclosed in the present application will be described in detail below, with reference to the accompanying drawings. Herein, this invention is not limited to the embodiment described below.

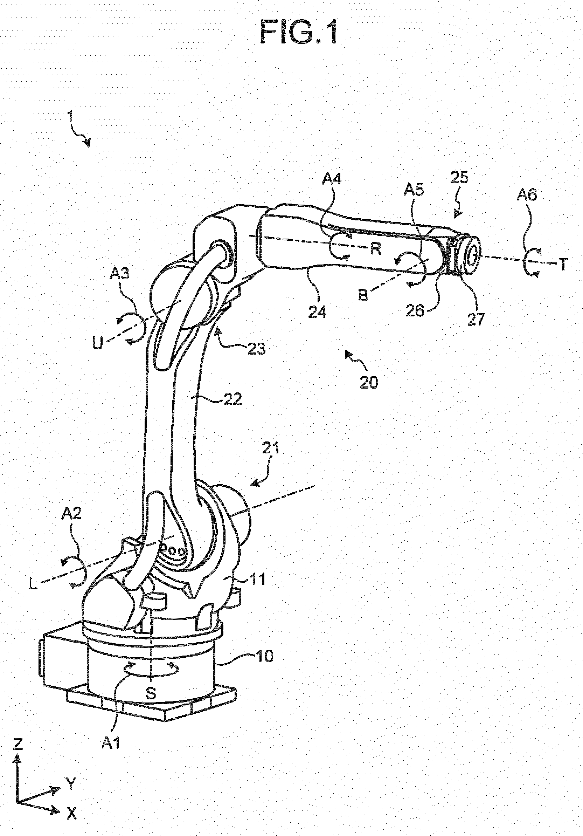

FIG. 1 is a perspective schematic view illustrating a configuration of a robot 1 according to an embodiment. Herein, FIG. 1 illustrates a three-dimensional Cartesian coordinate system that includes a Z-axis with a vertically upward direction being a positive direction, for the sake of better understanding of illustration. Such a Cartesian coordinate system may also be illustrated in other drawings that are used for the following description.

Hereinafter, a positional relationship between respective parts of the robot 1 will be described assuming that a turning position of the robot 1 is in a state illustrated in FIG. 1, for the purpose of illustration.

As illustrated in FIG. 1, the robot 1 is a single-arm-type multi-axis robot, and includes a base 10, a turning part 11 that is turnably coupled to the base 10, and an arm part 20. The arm part 20 includes a plurality of arms that are rotatably coupled through a joint, a wrist, a tip movable part, or the like.

Specifically, the arm part 20 includes a first joint 21, a first arm 22, a second joint 23, a second arm 24, a third joint 25, a wrist 26, and a tip movable part 27. The first joint 21, the second joint 23, and the third joint 25 are merely examples of a joint mechanism.

The base 10 is fixed on a floor surface or the like. A bottom end of the first arm 22 is coupled to the turning part 11 through the first joint 21. Thereby, the first arm 22 is supported turnably around an axis S and rotatably around an axis L (see arrows A1 and A2 in the drawing) at the bottom end thereof.

A bottom end of the second arm 24 is coupled to a leading end of the first arm 22 through the second joint 23. Thereby, the second arm 24 is supported rotatably around an axis U (see an arrow A3 in the drawing) at the bottom end thereof. Furthermore, the second arm 24 is provided rotatably around an axis R (see an arrow A4 in the drawing).

A bottom end of the wrist 26 is coupled to a leading end of the second arm 24 through the third joint 25. Thereby, the wrist 26 is supported rotatably around an axis B (see an arrow A5 in the drawing) at the bottom end thereof.

Furthermore, the wrist 26 supports the tip movable part 27 rotatably around an axis T (see an arrow A6 in the drawing) at a leading end thereof. Although it is not illustrated in FIG. 1, a suitable end effector such as a robot hand, a welding torch, or a laser cut device is attached to the tip movable part 27.

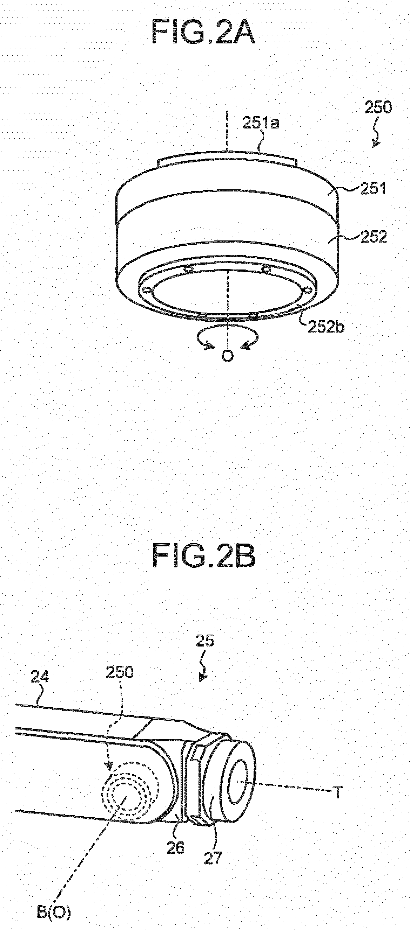

Next, an example of a configuration of a joint mechanism of the robot 1 will be described by using FIG. 2A to FIG. 3B. Herein, the present embodiment will be described that provides the third joint 25 as a main example of a joint mechanism of the robot 1.

First, FIG. 2A is a perspective schematic view of a driving device 250. Furthermore, FIG. 2B is a general enlarged view illustrating the periphery of the third joint 25.

As illustrated in FIG. 2A, the driving device 250 includes a hollow actuator 251, such as a hollow motor, and a hollow speed reducer 252. The hollow actuator 251 includes a hollow shaft 251a that has a hollow portion 253, and rotationally drives the hollow shaft 251a. Herein, the hollow actuator 251 is not only an electrical motor but may be any other kind of motor, for example, a hydraulic motor or the like.

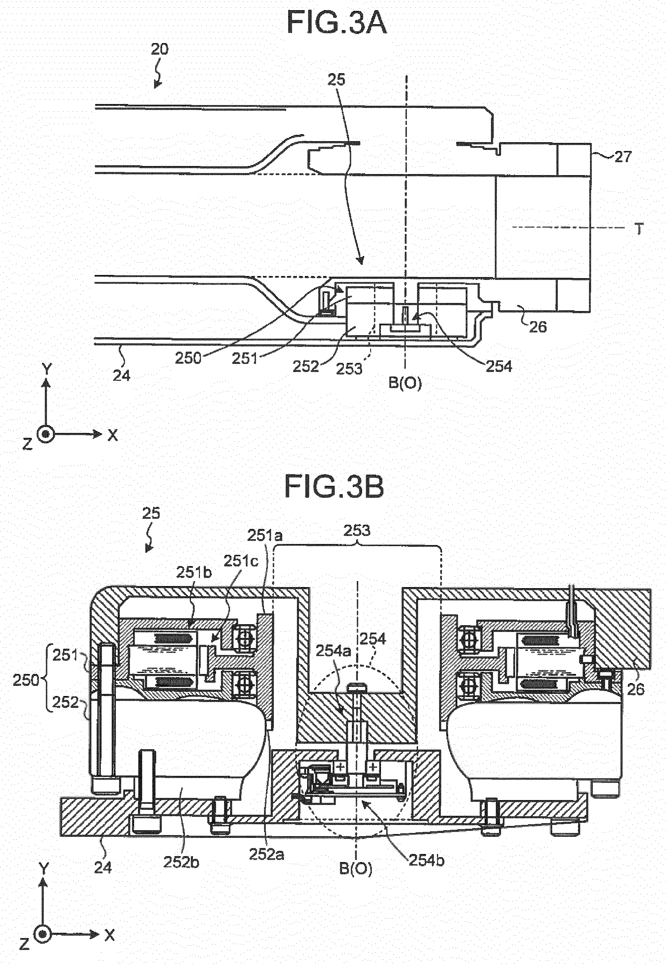

The hollow speed reducer 252 includes an input part 252a (not illustrated but described by FIG. 3B below) and an output part 252b. The input part 252a and the output part 252b have a hollow structure that is communicated with the hollow portion 253 of the hollow shaft 251a. Therefore, the input part 252a and the output part 252b are also examples of the hollow shaft.

The input part 252a is coupled to the hollow shaft 251a of the hollow actuator 251 and inputs rotation of the hollow shaft 251a thereto. The output part 252b reduces and outputs rotation of the hollow shaft 251a that is input to the input part 252a, and rotates around an axis O (see a double-headed arrow in the drawing).

The driving device 250 is mounted on, for example, the third joint 25 in such a manner that the axis O is arranged coaxially with the axis B, as illustrated in FIG. 2B. The output part 252b rotates around the axis 0, and thereby, the wrist 26 is rotated around the axis B.

Next, FIG. 3A is a transparent plan view illustrating the periphery of the third joint 25. Furthermore, FIG. 3B is a general enlarged cross-sectional view illustrating the periphery of the driving device 250 when being cut in an XY-plane.

As illustrated in FIG. 3A, the third joint 25 further includes an encoder 254. The encoder 254 is arranged in the hollow portion 253 that is possessed by the hollow actuator 251 and the hollow speed reducer 252, and is directly coupled to a final output shaft, namely the axis B, which is an axis of rotation of the wrist 26.

An example of a configuration of the third joint 25 that includes the encoder 254 will be described more specifically. As illustrated in FIG. 3B, the driving device 250 that includes the hollow actuator 251 and the hollow speed reducer 252 is mounted on the third joint 25.

The hollow actuator 251 further includes a stator 251b and a rotor 251c. The stator 251b is fixed on a frame of the hollow actuator 251. The rotor 251c is rotatably provided for the stator 251b through a bearing. Herein, the stator 251b and the rotor 251c are oppositely arranged with a predetermined gap in radial directions.

The hollow shaft 251a described above is connected to the rotor 251c. Herein, the hollow shaft 251a and the rotor 251c may not be separate bodies but be formed monolithically.

The hollow shaft 251a is coupled to the input part 252a of the hollow speed reducer 252, as already described.

A main body of the hollow speed reducer 252, which includes the input part 252a of the hollow speed reducer 252, and the hollow actuator 251 are fixed on the wrist 26 that is a driven body. On the other hand, the output part 252b of the hollow speed reducer 252 is fixed on the second arm 24 that is a driving body.

The encoder 254 arranged in the hollow portion 253 includes an input part 254a and an output part 254b. The input part 254a is arranged coaxially with the axis B and connected to the wrist 26. On the other hand, the output part 254b is connected to the second arm 24.

A coil wound around a stator core of the stator 251b is excited so as to rotate the rotor 251c and the hollow shaft 251a that is connected thereto. The rotation of the hollow shaft 251a is input to the input part 252a of the hollow speed reducer 252.

Then, the output part 252b of the hollow speed reducer 252 reduces and outputs the rotation input to the input part 252a so as to rotate. In this case, because the output part 252b is fixed on the second arm 24 that is a driving body, the output part 252b relatively rotates the main body of the hollow speed reducer 252 excepting the output part 252b, and the hollow actuator 251. That is, the wrist 26 on which these are fixed rotates around the axis B.

Then, such rotation of the wrist 26 around the axis B is input to the input part 254a of the encoder 254 that is arranged coaxially with the axis B and thereby directly coupled thereto. Then, the output part 254b of the encoder 254 detects and outputs such rotation of the wrist 26 that is input to the input part 254a.

Thus, in the present embodiment, the encoder 254 is directly coupled to the axis B, namely, the final output shaft, which is a rotation axis of rotation that is finally output from the hollow actuator 251 through the hollow speed reducer 252. Therefore, it is possible to detect practical rotation of the wrist 26 accurately.

That is, it is possible to detect practical rotation of the wrist 26 accurately. Furthermore, in the present embodiment, because the encoder 254 is arranged in the hollow portion 253 that is possessed by the driving device 250, it is possible to make the joint mechanism of the robot 1 compact. Therefore, it is also possible to downsize the robot 1.

Herein, the present embodiment described above has been described by providing a configuration example that does not illustrate a brake for the hollow actuator intentionally. A brake function of the brake is also realizable without the brake by, for example, using a worm gear or the like for an internal gear of a speed reducer and thereby providing a self-lock function thereto.

Of course, the brake may be included. In this case, the brake is preferably arranged in the hollow portion of the hollow actuator, similarly to the encoder.

Although the embodiment described above has also been described by mainly providing the third joint as an example, the position of the joint mechanism is not limited thereby. Therefore, the embodiment described above may be applied to, for example, the first joint. In this case, the turning part is a driving body and the first arm is a driven body. Furthermore, it may be applied to the second joint. In this case, the first arm is a driving body and the second arm is a driven body.

Although the case where two links that are the first and second arms are included in one arm part has also been illustrated in the embodiment described above, the number of arms is not limited thereby.

Although a multi-axis robot that has six axes for one arm part has also been illustrated in the embodiment described above, the number of axes is not limited thereby. For example, it may be a multi-axis robot with seven axes.

Although a single-arm robot has also been illustrated in the embodiment described above, the robot is not limited thereto, and for example, may be a two-arm robot or may be a multi-arm robot that has three or more arms.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

1 robot
10 base
11 turning part
20 arm part
21 first joint
22 first arm
23 second joint
24 second arm
25 third joint
250 driving device
251 hollow actuator
251a hollow shaft
251b stator
251c rotor
252 hollow speed reducer
252a input part
252b output part
253 hollow portion
254 encoder
254a input part
254b output part
26 wrist
27 tip movable part
A1 - A6 arrows
B axis
L axis
O axis
R axis
S axis
T axis
U axis

## Claims

1. A robot comprising:
a driving body;
a driven body that is rotatably coupled to the driving body;
a driving device that drives the driven body, the driving device being provided on the driven body; and
an encoder that is attached to a final output shaft of the driving device.

2. The robot according to claim 1, wherein
the driving device includes:
a hollow actuator;
a speed reducer that is coupled to the hollow actuator; and
the final output shaft that is coupled to the speed reducer.

3. The robot according to claim 2, wherein the final output shaft is arranged in a hollow portion of a hollow shaft in the hollow actuator.

4. The robot according to claim 3, wherein the hollow shaft and the final output shaft are arranged coaxially.

5. The robot according to claim 1, wherein
the driving body is a second arm, and
the driven body is a wrist that is rotatably coupled to the second arm.

6. The robot according to any one of claims 1 to 5, wherein
the encoder includes an input part and an output part, and
the input part is connected to the driven body and the output part is connected to the driving body.

7. A robot joint mechanism comprising
a driving body and a driven body that are rotatably coupled through the joint mechanism;
a driving device that drives the driven body, the driving device being provided on the driven body; and
an encoder that is attached to a final output shaft of the driving device.
